# EUROPÄISCHE PATENTANMELDUNG

(11) **EP 1 284 204 A2**
(43) Veröffentlichungstag der Anmeldung: **19.02.2003**
(21) Anmeldenummer: 02102135.7
(22) Anmeldetag: 14.08.2002
(51) Int. Cl.: B60C 23/04

(54) **Anordnung zur Fahrzeugpositionszuordnung von Rädern eines Fahrzeugs**

(30) Priorität: 16.08.2001 DE 10140146
(71) Anmelder: Philips Corporate Intellectual Property GmbH, 20099 Hamburg (DE); Koninklijke Philips Electronics N.V., 5621 BA Eindhoven (NL)
(72) Erfinder: Nowottnick, Jürgen, Postfach 500442, 52088 Aachen (DE); Böh, Frank, Postfach 500442, 52088 Aachen (DE)
(74) Vertreter: Volmer, Georg, Dipl.-Ing.

(57) **Zusammenfassung**

Die Erfindung betrifft eine Anordnung zur Fahrzeugpositionszuordnung von Rädern (2,4, 6, 8) eines Fahrzeugs, wobei jedem Rad (2, 4, 6, 8) Mittel (3, 5, 7, 9) zur Ermittlung der Drehzahl und Drehrichtung des Rades (2, 4, 6, 8) zugeordnet sind. Nach zwei weiteren Ausführungsformen ist an Stelle der Mittel zur Ermittlung der Drehrichtung des Rades ein Lenksensor (11) vorgesehen. Bei allen Ausführungsformen ist in dem Fahrzeug eine Auswerteeinheit 10 vorgesehen, welche bei einer Kurvenfahrt des Fahrzeugs (11) anhand der für jedes Rad (2, 4, 6, 8) ermittelten Drehzahlen und Drehrichtungen und ggf. anhand der Lenkrichtung eine Fahrzeugpositionszuordnung der einzelnen Räder (2, 4, 6, 8) vornimmt.

## Beschreibung

Die Erfindung betrifft eine Anordnung zur Ermittlung der Positionen von Rädern an einem Fahrzeug.

Die Räder eines Fahrzeugs können gegebenenfalls umgesetzt werden, d. h. die Position der Räder an einem Fahrzeug kann verändert werden. Gegebenenfalls an den Rädern befindliche elektronische Baugruppen, wie beispielsweise Luftdrucksensoren, sind dem jeweiligen Rad fest zugeordnet und werden somit ebenfalls zusammen mit dem Rad umgesetzt. Die elektronischen Signale die derartige Sensoren liefern, werden zentral in dem Fahrzeug ausgewertet. Nach einem Umsetzen der Räder ist jedoch nicht mehr bekannt, an welcher Position sich ein bestimmtes Rad befindet, dessen Baugruppe ein bestimmtes Signal liefert. Beispielsweise bei Luftdrucksensoren ist es jedoch wünschenswert, zu wissen, an welcher Fahrzeugposition sich das Rad befindet, dem ein Luftdrucksensor zugeordnet ist, der beispielsweise einen zu niedrigen Luftdruck meldet. In dem Fahrzeug soll angezeigt werden, dass sich dieser Sensor beispielsweise vorne links befindet. Nach einem Umsetzen der Räder steht diese Information jedoch nicht mehr zur Verfügung bzw. ist falsch.

Es ist daher wünschenswert, eine Anordnung zur Fahrzeugposition der Räder zu haben, welche auch nach einem Umsetzen der Räder in der Lage ist zu ermitteln, an welcher Fahrzeugposition sich die einzelnen Räder befinden, so dass auch nach einem Umsetzen der Räder die oben erwähnten elektronischen Baugruppen einer bestimmten Fahrzeugposition zugeordnet werden können.

Nach dem Stande der Technik sind hierzu einerseits Anordnungen bekannt, bei denen die elektronischen Baugruppen, die jeweils einem Rad zugeordnet sind, ihre Sendesignale mit unterschiedlichen Amplituden senden. Durch die Toleranzen der Baugruppen und die notwendige Kalibrierung ist diese Vorgehensweise jedoch einerseits relativ aufwendig und in der Praxis wegen der Amplitudensensibilität nicht sehr zuverlässig.

Außerdem ist aus dem US-Patent 6, 112, 587 eine Methode zur Positionsordnung der Räder eines Fahrzeugs bekannt, bei der an den Rädern Winkelsensoren vorgesehen sind, welche zu diskreten Zeitpunkten ihre Winkelsignale an eine zentrale Auswerteeinheit liefern. Ferner ermittelt die Auswerteeinheit mittels fest am Fahrzeug an den Radpositionen vorgesehenen HBS-Sensoren die Drehzahlen der jeweiligen Rädern. Diese von den Drehzahlsensoren gelieferten Umdrehungssignale werden in der zentralen Einheit dahingehend überprüft, welches Umdrehungssignal den gleichen Winkelversatz aufweist, wie die von den Winkelsensoren an den Rädern gelieferten Signalen. Dieses Verfahren ist relativ aufwendig und benötigt vor allem die Signale von ABS-Sensoren, die nicht immer zur Verfügung stehen.

Es ist Aufgabe der Erfindung, eine Anordnung der Eingangs genannten Art anzugeben, welche zuverlässig arbeitet ohne an dem Fahrzeug befindliche Drehzahlsensoren auskommt.

Diese Aufgabe ist gemäß einer ersten Ausführungsform der Erfindung durch die Merkmale des Patentanspruchs 1 gelöst:
Anordnung zur Fahrzeugpositionszuordnung von Rädern eines Fahrzeugs, wobei jedem Rad Mittel zur Ermittlung der Drehzahl und Drehrichtung des Rades zugeordnet sind und wobei in dem Fahrzeug eine Auswerteeinheit vorgesehen ist, welche bei einer Kurvenfahrt des Fahrzeugs anhand der für jedes Rad ermittelten Drehzahlen und Drehrichtungen folgende Fahrzeugpositionszuordnungen vornimmt:
   - das Rad mit der höchsten Drehzahl befindet sich vorne am Fahrzeug, aus der Drehrichtung wird die Position vorne links oder vorne rechts ermittelt,
   - das Rad mit der niedrigsten Drehzahl befindet sich hinten am Fahrzeug, aus der Drehrichtung wird die Position vorne links oder vorne rechts ermittelt,
   - die Positionszuordnungen der übrigen zwei Räder werden aus deren Drehrichtung ermittelt.

In der erfindungsgemäßen Anordnung sind jedem Rad Mittel zur Ermittlung der Drehzahl und der Drehrichtung des Rades zugeordnet. Im Fahrzeug ist eine Auswerteeinheit vorgesehen, welche bei einer Kurvenfahrt des Fahrzeugs anhand der für jedes Rad mittels der zugeordneten Mittel ermittelten Drehzahlen und Drehrichtungen eine Zuordnung der Räder zu den Positionen am Fahrzeug vornimmt.

In einer solchen Kurvenfahrt ermittelt die Auswerteeinheit das Rad mit der höchsten Drehzahl. Dieses befindet sich immer vorne am Fahrzeug, da bei einer Kurvenfahrt die Hinterachse nachläuft. Aus der Drehrichtung wird die Position des Rades vorne links oder vorne rechts ermittelt; dreht sich das Rad rechts herum befindet es sich vorne rechts, dreht es sich links herum befindet es sich vorne links.

Sodann ermittelt die Auswerteeinheit das Rad mit der niedrigsten Drehzahl, welches sich immer hinten am Fahrzeug befindet. Auch hier kann wieder aus der Drehrichtung auf die Position hinten links oder hinten rechts geschlossen werden.

In der Phase verbleiben noch zwei Räder, deren Position an dem Fahrzeug noch nicht zugeordnet ist. Da sich die Position dieser Räder immer diagonal gegenüberliegen genügt hier die Ermittlung der Drehrichtung. Daraus ergibt sich unmittelbar, dass eines der Räder, das sich rechts herum dreht, an der noch nicht besetzten Position vorne rechts oder hinten rechts befindet und das sich das andere Rad, welches eine Linksdrehung aufweist, an der noch nicht besetzten Position vorne links oder hinten links befindet.

Damit sind dann die Räder allen vier Position des Fahrzeugs zugeordnet.

Hierbei kann auf an den Fahrzeugpositionen des Fahrzeugs fest zugeordneten Drehzahlsensoren verzichtet werden. Die Anordnung weist ferner eine hohe Zuverlässigkeit und Störsicherheit auf, da sie von analogen Messgrößen unabhängig ist. Es ist keine Kalibrierung der Drehzahlsensoren erforderlich, da die Auswerteeinheit eine zentrale Auswertung vornimmt und rein digitale Messverfahren anwendbar sind Der Aufwand ist relativ gering und somit wirtschaftlich möglich. Die Drehzahl und Drehrichtungssensoren der Räder können ggf. für weitere Aufgaben innerhalb der Fahrzeugelektronik eingesetzt werden.

Die o. a. Aufgabe der Erfindung ist gemäß einer zweiten Ausführungsform durch die Merkmale des Patentanspruchs 2 gelöst:
Anordnung zur Fahrzeugpositionszuordnung von Rädern eines Fahrzeugs, wobei jedem Rad Mittel zur Ermittlung der Drehzahl des Rades zugeordnet sind, wobei ein Lenksensor vorgesehen ist, welcher ein die Lenkrichtung signalisierendes Lenksignal abgibt, und wobei in dem Fahrzeug eine Auswerteeinheit vorgesehen ist, welche bei einer Kurvenfahrt des Fahrzeugs anhand der für jedes Rad ermittelten Drehzahlen und Drehrichtungen und des Lenksignals folgende Fahrzeugpositionszuordnungen vornimmt:
   - bei Kurvenfahrt einer ersten Richtung
      - das Rad mit der höchsten Drehzahl befindet sich vorne am Fahrzeug aus der Lenkrichtung wird die Position vorne links oder vorne rechts ermittelt,
      - das Rad mit der niedrigsten Drehzahl befindet sich hinten am Fahrzeug, aus der Lenkrichtung wird die Position vorne links oder vorne rechts ermittelt,
   - bei Kurvenfahrt einer zweiten Richtung
      - das Rad mit der höchsten Drehzahl befindet sich vorne am Fahrzeug aus der Lenkrichtung wird die Position vorne links oder vorne rechts ermittelt,
      - das Rad mit der niedrigsten Drehzahl befindet sich hinten am Fahrzeug, aus der Lenkrichtung wird die Position hinten links oder hinten rechts ermittelt.

Bei dieser Ausführungsform der Erfindung bestimmen die jedem Rad zugeordneten Mittel lediglich die Drehzahl und nicht die Drehrichtung des Rades. Statt dessen ist in dem Fahrzeug ein Lenksensor vorgesehen, welcher ein Lenksignal abgibt, das die jeweilige Lenkrichtung signalisiert, das also angibt, in welche Richtung das Fahrzeug in einer Kurve gelenkt wird

Aus diesen Informationen wird gemäß der zweiten Ausführungsform der Erfindung ebenfalls eine Zuordnung der Positionen der Räder an dem Fahrzeug vorgenommen.

Die Auswerteeinheit bestimmt dabei diese Fahrzeugposition nach folgenden Regeln:
Anhand des Lenksensors wird zunächst bei einer Kurvenfahrt einer ersten Richtung, wobei es keine Rolle spielt, ob es sich um eine Links- oder eine Rechtskurve handelt, zunächst das Rad mit der höchsten Drehzahl bestimmt. Dieses befindet sich vorne am Fahrzeug. Aus der Lenkrichtung kann unmittelbar auf die Position vorne links oder vorne rechts geschlossen werden. Handelt es sich beispielsweise um eine Linkskurve, so berindet sich dieses Rad vorne rechts; handelt es sich dagegen um eine Rechtskurve, befindet es sich vorne links.

Das Rad mit der niedrigsten Drehzahl wird der Hinterachse des Fahrzeugs zugeordnet. Auch hier kann wieder aus der Lenkrichtung unmittelbar darauf geschlossen werden, ob sich das Rad hinten links oder hinten rechts befindet. Handelt es sich nämlich um eine Linkskurve, befindet sich das Rad hinten links; handelt es sich dagegen um eine Rechtskurve, befindet es sich hinten rechts.

Anschließend wartet die Auswerteelektronik, bis eine Kurvenfahrt einer zweiten Richtung, also derjenigen der ersten Richtung entgegengesetzten Richtung, vorgenommen wird. Dann wertet die Auswerteelektronik die Signale der Mittel zur Ermittlung der Drehzahl weiter wie folgt aus:
Es wird wiederum dasjenige Rad mit der höchsten Drehzahl ermittelt, welches sich vorne am Fahrzeug befindet Abhängig von der Lenkrichtung kann dieses wie oben beschrieben der Position vorne links oder vorne rechts zugeordnet werden. Da es sich nun jedoch um eine Kurvenfahrt entgegengesetzter Richtung handelt, wird die jeweils andere Position, die bisher noch nicht besetzt ist, besetzt.

In entsprechender Weise wird aus dem Rad mit der niedrigsten Drehzahl hinten am Fahrzeug die Position ermittelt.

Die Anordnung nach der zweiten Ausführungsform der Erfindung weist die gleichen Vorteile auf wie diejenige nach der ersten Ausführungsform, wobei hier zusätzlich auf Mittel zur Ermittlung der Richtung der Räder verzichtet werden kann. Es ist zwar ein Lenksensor erforderlich, dieser wird jedoch bei sich immer weiter verbreitenden elektrisch arbeitenden Lenkungen ohnehin zur Verfügung stehen. Ein solcher Lenksensor steht ferner bei Fahrzeugen mit ESP oder ähnlichen Systemen ohnehin zur Verfügung.

Die oben angegebene Aufgabe wird gemäß einer dritten Ausführungsform der Erfindung durch die Merkmale des Patentanspruchs 3 gelöst:

Anordnung zur Fahrzeugpositionszuordnung von Rädern eines Fahrzeugs, wobei jedem Rad Mittel zur Ermittlung der Drehzahl des Rades zugeordnet sind, wobei ein Lenksensor vorgesehen ist, welcher ein die Lenkrichtung signalisierendes Lenksignal abgibt und wobei in dem Fahrzeug eine Auswerteeinheit vorgesehen ist, welche bei einer Kurvenfahrt des Fahrzeugs mit einem einen vorgegebenen Lenkeinschlag überschreitenden Lenkeinschlag anhand der für jedes Rad ermittelten Drehzahlen und Drehrichtungen und des Lenksignals folgende Fahrzeugpositionszuordnungen vornimmt:
- das Rad mit der höchsten Drehzahl befindet sich vorne am Fahrzeug. Aus der Lenkrichtung wird die Position vorne links oder vorne rechts ermittelt,
- das Rad mit der niedrigsten Drehzahl befindet sich hinten am Fahrzeug. Aus der Lenkrichtung wird die Position vorne links oder vorne rechts ermittelt.
- das Rad mit der zweithöchsten Drehzahl befindet sich hinten am Fahrzeug. Aus der Lenkrichtung wird die Position hinten links oder hinten rechts ermittelt,
- das Rad mit der zweitniedrigsten Drehzahl befindet sich vorne am Fahrzeug. Aus der
   Lenkrichtung wird die Position vorne links oder vorne rechts ermittelt.

Die dritte Ausführungsform der Erfindung arbeitet ähnlich wie die zweite Ausführungsform mit Mitteln an den Rädern, welche lediglich die Drehzahl und nicht auch die Drehrichtung des jeweiligen Rades ermitteln. Bei der dritten Ausführungsform der Erfindung ermittelt die Anordnung die Positionen der Räder bei einer einzigen Kurvenfahrt, unabhängig von deren Richtung. Die Richtung muss jedoch zur korrekten Zuordnung der Räder zu den Fahrzeug-Positionen bekannt sein.

Die Auswerteeinheit bestimmt zunächst das Rad mit der höchsten Drehzahl, welches sich vorne am Fahrzeug befindet. Aus der Lenkrichtung ist wiederum bekannt, ob es sich vorne rechts oder links befindet.

Das Rad mit der niedrigsten Drehzahl befindet sich hinten am Fahrzeug, wobei die Position an der Hinterachse durch die Lenkrichtung bestimmt werden kann.

Insoweit ähnelt die Vorgehensweise der Auswerteeinheit derjenigen gemäß der zweiten Ausführungsform der Erfindung.

Im Gegensatz zur zweiten Ausführungsform werden jedoch bei der dritten Ausführungsform die Zuordnungen der beiden übrigen Räder in der gleichen Kurvenfahrt vorgenommen.

Dabei ist das Rad mit der zweithöchsten Drehzahl hinten am Fahrzeug, wobei aus der Lenkrichtung wiederum darauf geschlossen werden kann, ob es sich hinten links oder hinten rechts befindet. In entsprechender Weise kann das Rad mit der zweithöchsten Drehzahl der richtigen Position an der Vorderachse zugeordnet werden.

Diese Vorgehensweise ist nur dann zulässig, wenn sich zwischen den Rädern einer Achse hinreichende Drehzahldifferenzen ergeben. Daher ist hier die Bedingung zu stellen, dass der Lenkeinschlag, mit dem Kurve durchfahren wird, einen vorgegebenen Lenkeinschlag überschreitet. Nur dann ist diese Bedingung sichergestellt.

Im Übrigen weisen die zweite und die dritte Ausführungsform der Erfindung die gleichen Vorzüge auf wie die erste Ausführungsform.

Für alle drei Ausführungsformen der Erfindung ist gemäß einer Ausgestaltung nach Anspruch 4 vorgesehen, dass als Mittel zur Ermittlung der Drehzahl oder der Drehrichtung des jeweiligen Rades ein Sensor an dem jeweiligen Rad vorgesehen ist. Aus dem Sensor-Signal kann dann die zentrale Auswerteeinheit die Drehzahlwerte bestimmen.

Bei den Anordnungen gemäß der zweiten und der dritten Ausführungsform der Erfindung kann vorteilhaft eine nach Anspruch 5 vorgesehene Plausibilitätsführung dahingehend vorgenommen werden, ob eine Position eines Fahrzeugs, der in einem vorgehenden Schritt bereits ein Rad zugeordnet wurde, in einem späteren Schritt ein weiteres Rad zugeordnet werden soll. Dieses ist selbstverständlich unzulässig. In einem solchen Fall, in dem die Plausibilitätsprüfung nicht positiv ist, ist es vorteilhaft, wie gamäß einer weiteren Ausgestaltung der Erfindung nach Anspruch 10 vorgesehen ist, die neuen Zuordnungen zu verwerfen und statt dessen früher ermittelte Positionszuordnungen weiterhin als gültig anzusehen.

Für die Anordnung gemäß der ersten Ausführungsform sind in den Ansprüchen 6 bis 8 weitere vorteilhafte Plausibilitätsprüfungen vorgesehen, bei deren negativem Ergebnis ebenfalls vorteilhaft eine frühere Positionszuordnung gültig bleibt.

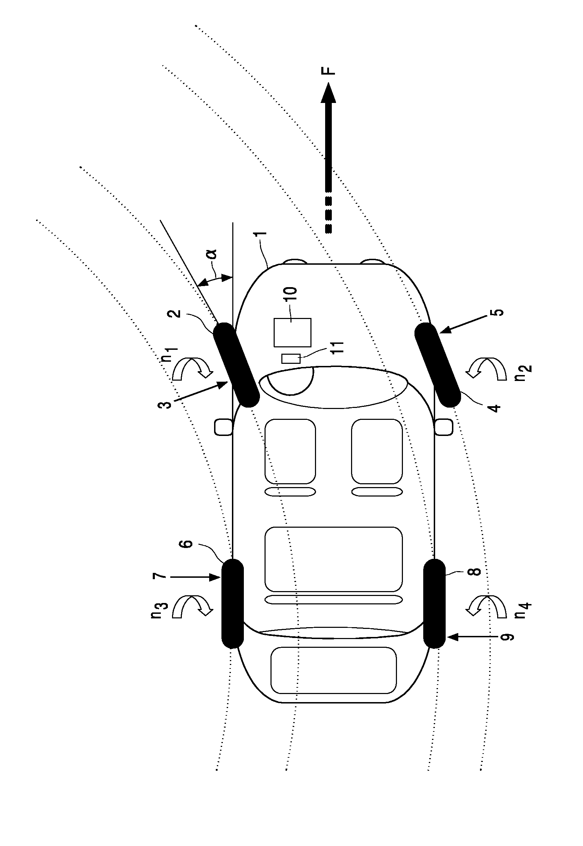

Nachfolgend werden die drei Ausführungsformen der Erfindung anhand der einzigen Figur der Zeichnung näher erläutert.

Die Figur zeigt in schematischer Darstellung ein Fahrzeug 1 in Ansicht von oben.

Das Fahrzeug 1 weist 4 Räder, 2, 4, 6 und 8 auf, die den jeweiligen vier Positionen des Fahrzeugs zugeordnet sind. Dabei ist das Rad 2 der Position vorne links, das Rad 4 der Position vorne rechts, das Rad 6 der Position hinten links und das Rad 8 der Position hinten rechts zugeordnet.

Die jeweiligen Räder weisen Mittel 3, 5, 7 und 9 zur Ermittlung der Drehzahl, und bei der zweiten und dritten Ausführungsform der Erfindung auch der Drehrichtung, auf.

Dabei sind diese Mittel zur Ermittlung der Drehzahl und/oder Drehrichtung dem jeweiligen Rad fest zugeordnet, also an diesem angeordnet.

Die Mittel 3, 5, 7 und 9 können zur Ermittlung der Drehzahl Drehzahlsensoren aufweisen, welche unmittelbar die jeweiligen Drehzahlen an eine zentrale Auswerteeinheit 10 übermitteln.

Die Mittel 3, 5, 7 und 9 können jedoch auch Winkel-Beschleunigungssensoren oder Ähnliches aufweisen, welche Messsignale an die zentrale Auswerteeinheit 10 liefern, die daraus die jeweiligen Drehzahlen der Räder bestimmt.

Die Figur zeigt, dass dem Rad 2 die Mittel 3 zugeordnet sind, welche die Drehzahl n₁ des Rades 2 bestimmen. In entsprechender Weise bestimmen die Mittel 5 die Drehzahl n₂ des Rades 4, die Mittel 7 die Drehzahl n₃ des Rades 6 und die Mittel 9 die Drehzahl n₄ des Rades 8.

Es wird angenommen, dass sich das Fahrzeug in Fahrtrichtung F gemäß der Darstellung der Figur befindet und eine Linkskurve durchfährt.

Nachfolgend werden die Arbeitsweisen der Anordnungen gemäß den drei Ausführungsformen näher erläutert.

Bei der ersten Ausführungsform, der Erfindung ermitteln die Sensoren 3, 5, 7 und 9 nicht nur die Drehzahl des jeweiligen Rades, sondern auch dessen Drehrichtung.

Beispielsweise bei der in der Figur dargestellten Linkskurve, die das Fahrzeug durchfährt, werden dann mittels der zentralen Auswerteeinheit 10 folgende Zuordnungen vorgenommen:
Es wird das Rad mit der höchsten Drehzahl ermittelt. Dies ist in dem Ausführungsbeispiel das Rad 4 mit der Drehzahl n_{2.} Bei einer Kurvenfahrt befindet sich das Rad mit der höchsten Drehzahl aufgrund der geometrischen Verhältnisse immer vorne am Fahrzeug. Der Sensor 5 des Rades 4, das zunächst als das mit der höchsten Drehzahl ermittelt wurde, liefert darüber hinaus eine Information über die Drehrichtung, in dem Ausführungsbeispiel gemäß der Figur dreht sich das Rad rechts herum. Daraus ist dann bereits bekannt, dass sich dieses Rad in der Position vorne rechts befindet.

Nachfolgend ermittelt die Auswerteeinheit 10 das Rad mit der niedrigsten Drehzahl, welches in diesem Fall des Rad 6 ist, welches sich gemäß der von den Mitteln 7 ermittelten Drehzahl n₃ dreht. Auch hier ist zunächst nur bekannt, dass sich das Fahrzeug aufgrund der geometrischen Verhältnisse an der Hinterachse befindet. Der Sensor 7 übermittelt jedoch ferner die Drehrichtung, in diesem Beispielsfall links, so dass unmittelbar darauf geschlossen werden kann, dass sich das Rad 6 hinten links am Fahrzeug befindet.

In dieser Phase sind zunächst noch die Positionszuordnungen zweier Räder unbekannt.

Für diese beiden Räder, in dem Ausführungsbeispiel gemäß der Figur die Räder 2 und 8 und die von diesen ermittelten Sensorsignale der Sensoren 3 und 9, befinden sich also an den beiden übrigen, noch frei verbliebenen Positionen vorne links und hinten rechts. Da die Räder an diesen beiden Positionen entgegengesetzte Drehrichtungen aufweisen, kann aus den Drehrichtungen, die die beiden Sensoren 3 und 9 liefern, unmittelbar auf die Position der Räder geschlossen werden.

Damit ist in einer einzigen Kurvenfahrt eine Positionszuordnung der 4 Räder 2, 4, 6 und 8 zu den vier Fahrzeugpositionen gelungen.

Es können bei dieser ersten Ausführungsform vorteilhaft Plausibilitätsprüfungen vorgenommen werden, bei denen beispielsweise überprüft werden kann, ob die Räder mit der höchsten oder niedrigsten Drehzahl unterschiedliche Drehrichtungen aufweisen, was aufgrund der Geometrie der Fall sein muss. Ferner kann überprüft werden, ob die nach Zuordnung der Räder mit der niedrigsten und der höchsten Drehzahl verbleibenden zwei Räder unterschiedliche Drehrichtungen aufweisen, was ebenfalls der Fall sein sollte. Ferner kann ermittelt werden, ob der größte und der kleinste ermittelte Drehzahlwert um eine Mindestdifferenz von den nächstkleineren bzw. nächstgrößeren Werten abweichen.

Diese ermittelten Drehzahldifferenzen können ferner zur Bestimmung der Zuordnungssicherheit herangezogen werden. Es gilt dabei: je größer die Drehzahldifferenzen, desto größer die Zuordnungssicherheit.

Nachfolgend soll anhand der einzigen Figur zunächst eine Beschreibung der Arbeitsweise der erfindungsgemäßen Anordnung gemäß der zweiten Ausführungsform vorgenommen werden.

Es wird wieder Bezug auf die einzige Figur genommen; die Sensoren 3, 5, 7 und 9 der Räder 2, 4, 6 und 8 liefern bei der zweiten Ausführungsform der Erfindung lediglich ein Drehzahlsignal. Der Auswerteeinheit 10 sind also bei der zweiten Ausführungsform der Erfindung die Drehrichtungen der einzelnen Räder nicht bekannt.

Stattdessen ist in dem Fahrzeug jedoch ein Lenksensor 11 vorgesehen, welcher ein Signal abgibt, aus der die Auswerteeinheit 10 ermittelt, welche Lenkrichtung vorliegt, d.h., ob das Fahrzeug eine Links- oder eine Rechtskurve durchfährt.

Aus den Signalen der Sensoren 3, 5, 7 und 9 und dem Signal des Lenksensors 11 kann die Auswerteeinheit 10 dabei die Ermittlung der Fahrzeugpositionen der Räder 2, 4, 6 und 8 wie folgt vornehmen:
Zunächst wird bei einer Kurvenfahrt einer ersten Richtung, wobei es keine Rolle spielt, ob es sich um eine Linkskurve oder eine Rechtskurve handelt, zunächst das Rad mit der höchsten Drehzahl ermittelt. Dieses befindet sich aus den oben erläuterten Gründen vorne am Fahrzeug. Aus der Lenkrichtung kann dabei auf die Position vorne links oder vorne rechts geschlossen werden. Handelt es sich beispielsweise um eine Linkskurve, wie in der Figur dargestellt, befindet sich das Rad mit der höchsten Drehzahl vorne rechts.

Das Rad mit der niedrigsten Drehzahl befindet sich hinten, wobei es sich bei der Lenkrichtung links hinten links befindet.

Hiermit sind zunächst die Positionszuordnungen bei einer Kurvenfahrt der ersten Richtung abgeschlossen. Anschließend wartet die Auswerteeinheit 10, bis eine Kurve der entgegengesetzten Richtung durchfahren wird Dann werden in entsprechender Weise wieder die Räder mit der höchsten und der niedrigsten Drehzahl ermittelt, und aus der dann entgegengesetzten Lenkrichtung kann wiederum auf die Positionen am Fahrzeug geschlossen werden.

Bei dieser zweiten Ausführungsform der Erfindung kann auf Drehrichtungssensoren an den Rädern 2, 4, 6 und 8 verzichtet werden. Der Lenksensor 11 ist ggf. sowieso im Fahrzeug vorhanden, beispielsweise bei Fahrzeugen mit Anti-Schleuder-Programmen.

Bei der dritten Ausführungsform der Erfindung kann auf die Tatsache, dass bei der Anordnung gemäß der zweiten Ausführungsform 2 Kurven entgegengesetzter Richtung durchfahren werden müssen, verzichtet werden. Jedoch muss bei der Anordnung gemäß der dritten Ausführungsform ein Mindestlenkeinschlag vorliegen, damit die vier Räder hinreichende Drehzahldifferenzen aufweisen. Liegt ein solcher vor, wird eine Ermittlung der Fahrzeugpositionen der Räder mittels der Anordnung nach der dritten Ausführungsform wie folgt vorgenommen:
Wie bereits oben erläutert, ist das Rad mit der höchsten Drehzahl anhand der Lenkrichtung zuordbar. Entsprechendes gilt für das Rad mit der niedrigsten Drehzahl. Es verbleiben dann noch zwei Räder, die nicht zugeordnet sind Eines davon ist das Rad mit der zweithöchsten Drehzahl, in dem Beispiel gemäß der Figur das Rad 8. Bei bekannter Lenkrichtung, in dem Beispiel der Figur links, ist unmittelbar bekannt, dass sich dieses Rad hinten rechts befindet. Dies ergibt sich wieder aus den geometrischen Verhältnissen. Aus den gleichen Gründen befindet sich das Rad mit der zweitniedrigsten Drehzahl vorne am Fahrzeug, in dem Beispiel gemäß der Figur vorne links.

Auch für die Anordnung gemäß der zweiten oder dritten Ausführungsform kann eine Plausibilitätsprüfung vorgenommen werden, die überprüft, ob in einem bestimmten Schritt ein Rad einer Position zugeordnet werden soll, die bereits vorher einem anderen Rad zugeordnet wurde.

Den Plausibilitätsprüfungen der drei Ausführungsformen ist gemein, dass bei negativem Ausgang der Plausibilitätsprüfungen vorteilhaft das aktuelle Zuordnungsergebnis verworfen wird und ein früheres Zuordnungsergebnis weiterhin als gültig angesehen wird.

Allen drei Ausführungsformen der Erfindung ist gemeinsam, dass auf die am Fahrzeug befindliche Drehzahlsensoren, beispielweise ABS-Sensoren, verzichten können.

Die Sensoren 3, 5, 7 und 9 sowie die Auswerteeinheit 10 und ggf. auch der Sensor 11 können rein digital arbeiten, so dass sich eine hohe Zuverlässigkeit und Störsicherheit ergibt, da keine analogen Messgrößen auftreten. Entsprechendes gilt für die Drehzahlsensoren, die keine Kalibrierung benötigen.

Die Genauigkeit der Drehzahlsensoren ist für die erfindungsgemäßen Anordnungen ebenfalls hinreichend Beispielsweise kann für einen angenommenen Reifenumfang von 150 cm und einem Lenkeinschlag α von 20 Grad eine Mindestwegdifferenz zwischen den Reifen von 9 cm ermittelt werden. Heutige Winkelsensoren bzw. Drehzahlsensoren arbeiten jedoch mit einer Genauigkeit kleiner 4 cm. Diese Abschätzung zeigt, dass die ermittelten Wegdifferenzen und somit die entsprechenden Drehzahldifferenzen auch unter Berücksichtigung der Toleranzen der Winkel- bzw. Drehzahlsensoren hinreichend groß sind, um die differierenden Drehzahlen der Räder festzustellen und eine einwandfreie Positionszuordnung vornehmen zu können.

## Patentansprüche

1. Anordnung zur Fahrzeugpositionszuordnung von Rädern (2,4,6,8) eines Fahrzeugs, wobei jedem Rad (2,4,6,8) Mittel (3,5,7,9) zur Ermittlung der Drehzahl und Drehrichtung des Rades (2,4,6,8) zugeordnet sind und wobei in dem Fahrzeug (1) eine Auswerteeinheit (10) vorgesehen ist, welche bei einer Kurvenfahrt des Fahrzeugs (1) anhand der für jedes Rad (2,4,6,8) ermittelten Drehzahlen und Drehrichtungen folgende Fahrzeugpositionszuordnungen vornimmt:
- das Rad (2,4,6,8) mit der höchsten Drehzahl befindet sich vorne am Fahrzeug (1), aus der Drehrichtung wird die Position vorne links oder vorne rechts ermittelt,
- das Rad (2,4,6,8) mit der niedrigsten Drehzahl befindet sich hinten am Fahrzeug (1), aus der Drehrichtung wird die Position vorne links oder vorne rechts ermittelt,
- die Positionszuordnungen der übrigen zwei Räder (2,4,6,8) werden aus deren Drehrichtung ermittelt.

2. Anordnung zur Fahrzeugpositionszuordnung von Rädern (2,4,6,8) eines Fahrzeugs (1), wobei jedem Rad (2,4,6,8) Mittel (3,5,7,9) zur Ermittlung der Drehzahl des Rades (2,4,6,8) zugeordnet sind, wobei ein Lenksensor (11) vorgesehen ist, welcher ein die Lenkrichtung signalisierendes Lenksignal abgibt, und wobei in dem Fahrzeug eine Auswerteeinheit (10) vorgesehen ist, welche bei einer Kurvenfahrt des Fahrzeugs anhand der für jedes Rad (2,4,6,8) ermittelten Drehzahlen und Drehrichtungen und des Lenksignals folgende Fahrzeugpositionszuordnungen vornimmt:
- bei Kurvenfahrt einer ersten Richtung
- das Rad (2,4,6,8) mit der höchsten Drehzahl befindet sich vorne am Fahrzeug (1), aus der Lenkrichtung wird die Position vorne links oder vorne rechts ermittelt,
- das Rad (2,4,6,8) mit der niedrigsten Drehzahl befindet sich hinten am Fahrzeug (1), aus der Lenkrichtung wird die Position vorne links oder vorne rechts ermittelt,
- bei Kurvenfahrt einer zweiten Richtung
- das Rad (2,4,6,8) mit der höchsten Drehzahl befindet sich vorne am Fahrzeug (1), aus der Lenkrichtung wird die Position vorne links oder vorne rechts ermittelt,
- das Rad (2,4,6,8) mit der niedrigsten Drehzahl befindet sich hinten am Fahrzeug (1), aus der Lenkrichtung wird die Position hinten links oder hinten rechts ermittelt.

3. Anordnung zur Fahrzeugpositionszuordnung von Rädern (2,4,6,8) eines Fahrzeugs (1), wobei jedem Rad (2,4,6,8) Mittel (3,5,7,9) zur Ermittlung der Drehzahl des Rades (2,4,6,8) zugeordnet sind, wobei ein Lenksensor (11) vorgesehen ist, welcher ein die Lenkrichtung signalisierendes Lenksignal abgibt, und wobei in dem Fahrzeug (1) eine Auswerteeinheit (10) vorgesehen ist, welche bei einer Kurvenfahrt des Fahrzeugs (1) mit einem einen vorgegebenen Lenkeinschlag überschreitenden Lenkeinschlag anhand der für jedes Rad (2,4,6,8) ermittelten Drehzahlen und Drehrichtungen und des Lenksignals folgende Fahrzeugpositionszuordnungen vornimmt:
- das Rad (2,4,6,8) mit der höchsten Drehzahl befindet sich vorne am Fahrzeug (1), aus der Lenkrichtung wird die Position vorne links oder vorne rechts ermittelt,
- das Rad (2,4,6,8) mit der niedrigsten Drehzahl befindet sich hinten am Fahrzeug (1), aus der Lenkrichtung wird die Position vorne links oder vorne rechts ermittelt.
- das Rad (2,4,6,8) mit der zweithöchsten Drehzahl befindet sich hinten am Fahrzeug (1), aus der Lenkrichtung wird die Position hinten links oder hinten rechts ermittelt,
- das Rad (2,4,6,8) mit der zweitniedrigsten Drehzahl befindet sich vorne am Fahrzeug (1), aus der Lenkrichtung wird die Position vorne links oder vorne rechts ermittelt.

4. Anordnung nach einem der Ansprüche 1 bis 3,
**dadurch gekennzeichnet,**
**dass** die Mittel (3,5,7,9) zur Ermittlung der Drehzahl des Rades (2,4,6,8) einen an dem jeweiligen Rad (2,4,6,8) angeordneten Winkelsensor sowie eine in dem Fahrzeug vorgesehene Elektronik aufweisen, welche aus den Winkelsignalen der an den Rädern angeordneten Winkelsensoren die jeweiligen Drehzahlwerte bestimmt.

5. Anordnung nach Anspruch 2 oder 3,
**dadurch gekennzeichnet,**
**dass** die Auswerteeinheit (10) eine Plausibilitätsprüfung vornimmt, bei der überprüft wird, ob einem bestimmten Rad in einem vorhergehenden Zuordnungsschritt bereits eine Position zugeordnet wurde, die in einem folgenden schritt einem weiteren Rad zugeordnet werden soll.

6. Anordnung nach Anspruch 1,
**dadurch gekennzeichnet,**
**dass** die Auswerteeinheit (10) eine Plausibilitätsprüfung vornimmt, bei der überprüft wird, ob die Räder (2,4,6,8) mit der höchsten und der niedrigsten Drehzahl unterschiedliche Drehrichtungen aufweisen.

7. Anordnung nach Anspruch 1,
**dadurch gekennzeichnet,**
**dass** die Auswerteeinheit (10) eine Plausibilitätsprüfung vornimmt, bei der überprüft wird, ob die zwei nach Zuordnung der Räder (2,4,6,8) mit der niedrigsten und der höchsten Drehzahl verbleibenden Räder (2,4,6,8) unterschiedliche Drehrichtungen aufweisen.

8. Anordnung nach Anspruch 1,
**dadurch gekennzeichnet,**
**dass** die Auswerteeinheit (10) eine Plausibilitätsprüfung vornimmt, bei der überprüft wird, ob der größte und der kleinste ermittelte Drehzahlwert jeweils um eine Mindestdifferenz vom nächstkleineren bzw. nächstgrößeren Drehzahlwert abweichen.

9. Anordnung nach Anspruch 8,
**dadurch gekennzeichnet,**
**dass** die Auswerteeinheit (10) die ermittelten Differenzen zur Bestimmung der Zuordnungssicherheit heranzieht.

10. Anordnung nach einem der Ansprüche 5 bis 8,
**dadurch gekennzeichnet,**
**dass** die Auswerteeinheit (10) bei negativem Ergebnis der Plausibilitätsprüfung alle neuen Zuordnungen verwirft werden und die vorherigen Positionszuordnungen gültig bleiben.
